# EUROPEAN PATENT SPECIFICATION

(11) **EP 2 511 160 B1**
(45) Date of publication and mention of the grant of the patent: **05.06.2013**
(21) Application number: 11161160.4
(22) Date of filing: 05.04.2011
(51) Int. Cl.: B62D 25/08

(54) **Front unit for a vehicle with shock absorbers and flexible belt**
Fronteinheit für ein Fahrzeug mit Stoßdämpfern und flexiblem Gurt
Unité frontale pour véhicule avec amortisseurs et courroie flexible

(43) Date of publication of application: 17.10.2012
(73) Proprietor: Faurecia Kunststoffe Automobilsysteme GmbH, 85080 Gaimersheim (DE)
(72) Inventor: Leudts, Thorsten, 49090 Osnabrück (DE)
(74) Representative: Tischner, Oliver

(56) References cited:
- DE-A1- 19 810 864
- DE-U1-202010 002 511

## Description

The invention relates to a front unit for a vehicle and a method for assembly of a front unit to a vehicle.

Typically, vehicles are equipped with various shock absorbers and respective bumpers in order to prevent severe damage to the vehicle structure in case of a collision of the vehicle with an obstacle. In a typical configuration, the front part of vehicles is designed in such a manner that pedestrians are protected as well as possible in case of a collision of the vehicle with the pedestrian. Here, it is the goal to protect the pedestrian's hip as well as possible in case of a collision of the vehicle with the pedestrian since hip injuries are rather difficult to heal.

For example, DE 20 2010 002511 does disclose a front unit of a vehicle according to the preamble of claim 1 with a special bumper design which permits to protect the pedestrian's leg as well as possible in case of a pedestrian-vehicle collision.

It is an object of the invention to provide an improved front unit. It is further an object of the invention to provide a method of assembly of a front unit to a vehicle.

Details of the invention are given by the independent claims. Preferred embodiments of the invention are described in the dependent claims.

There is provided a front unit for a vehicle, the vehicle comprising at least two pairs of longitudinal beams, wherein the front unit comprises an upper and a lower bumper support and two bearers interconnecting the upper and lower bumper support, wherein each bearer is attached to a plate, each plate being attachable to the distal ends of two of the longitudinal beams, wherein the bearers are adapted as shock absorbers in case of a vehicle crash, wherein the front unit further comprises an angular flexible belt interconnecting the bearers.

Embodiments of the present invention have the advantage that besides excellent pedestrian protection in case of a collision of the vehicle with a pedestrian and excellent vehicle passenger protection in case of a vehicle collision with a post can be provided. In case of a collision with a pedestrian, the front unit is softly deformed since the bearers are adapted as shock absorbers. In this case, the upper and/or lower bumper support will take up the impact energy and transfer it to the bearers. The bearers will absorb the impact energy completely in case of soft collisions. This is due to the fact that the bearers are attached to respective plates such that the plates will automatically distribute the impact energy over the whole contact area of the plate to the bearers.

On the other hand, in case of a collision with a post and a potential penetration of the post through the upper and/or lower bumper support, the post is allowed to get in contact with the angular flexible belt interconnecting the bearers. As a consequence, the angular flexible belt will be deformed in the direction of impact. Due to the highly stable interconnection between the longitudinal beams, the bearers and the angular flexible belt interconnecting the bearers, the post penetration will be obstructed. Depending on the flexible properties of the belt, the belt may act at the same time as impact energy absorber.

The provision of the angular flexible belt has the further effect that the stiffness of the front unit is enhanced since the bearers are additionally supported by the belt. Further, in case of a crash the risk of a collapse of the bearers or the longitudinal beams is further minimized.

In accordance with an embodiment of the invention, the belt interconnects the bearers indirectly via the plates. This has the advantage, that impact energy is more directly distributed towards the longitudinal beams. Thus, the total construction has higher mechanical stability and can thus withstand more easily post collisions with high impact energies.

In accordance with an embodiment of the invention, the belt interconnects the bearers directly, wherein the belt is arranged along the upper or lower bumper support adapting against said bumper support. The result is a compound element comprising both, the bumper support and the belt thus capable uniting the mechanical properties of both materials used for the bumper support and the belt, i.e. a composite material.

In accordance with an embodiment of the invention, the bearers comprise a honeycomb structure extending longitudinally over the bearers. The honeycomb structure has the advantage that in case of a collision the impact energy will be gradually absorbed: in case of a soft collision, only the individual elements of the honeycomb structure directly located at the vertical position of impact will be deformed or broken. In case of a collision with high-impact energy this energy will be distributed over the whole or at least a large part of the honeycomb structure of the bearers.

Consequently, the shock absorber 'automatically' adapts itself to the actual impact conditions.

In accordance with a further embodiment of the invention, the honeycomb structure comprises longitudinal hollow segments, wherein the segments are stacke perpendicularly on top of each other. In other words, the honeycomb structure comprises cuboid or tubular elements which longitudinal direction corresponds to the longitudinal direction of the vehicle, wherein a stacking of these segments is provided in directions perpendicularly to said longitudinal direction.

In accordance with a further embodiment of the invention, each plate covers the associated bearer over the bearer's complete height and width. This provides an optimal support of the bearers. Thus, punctual deformation of the bearers perpendicularly to the surface of the plates and extending over the area defined by the plates' surface in this perpendicular direction is prohibited. Again, this provides an optimal energy absorption involving large parts of the bearers.

In accordance with a further embodiment of the invention, the lower bumper support is arranged on the front unit at a predefined position, wherein the position is defined by the condition that when the lower bumper is mounted on the longitudinal beams, in case of a collision of the lower bumper with a pedestrian the pedestrian's leg is hit below the pedestrian's knee. This specially predefined position of the lower bumper support ensures that leg injuries of pedestrians are minimized in case of pedestrian collisions.

In accordance with a further embodiment of the invention, the upper and/or lower bumper support comprises freestanding fins extending away from the respective bumper support and/or the bearers comprise freestanding fins extending away from the respective bearer.

This has the advantage that the energy absorption capabilities in case of pedestrian collisions are further improved. Preferably, the elastic properties of the freestanding fins are dimensioned such that in case of a pedestrian collision the fins will be subject to a deformation before any deformation occurs on the bearers. For example, the fins may be provided with breaking points which additionally enhance the energy absorption capabilities of the front unit.

Preferably, the fins overlap the respective bumper supports such that a vehicle skin will first get in contact with the fins case of a collision which results in a first energy absorption by the fins. Only in case of higher impact energies, the fins may be deformed so strongly or may even get broken such that in a second energy absorption step the bearers get 'activated' and perform energy absorption due to compression and/or breaking of the bearers' elements.

In accordance with a further embodiment of the invention, the flexible belt is directly attached to the plates or to the longitudinal beams.

In accordance with a further embodiment of the invention, the flexible belt is directly attached to the plates or to the longitudinal beams. In other words, either the plates are interconnected directly via the angular flexible belt or indirectly via the flexible belts which are attached to the longitudinal beams. However, it has to be noted that it is preferred to use a direct attachment of the belt to the plates since this will significantly ease an assembly process of the front unit to a car - in this case the front unit and the flexible belt form an integral part which can be attached to the vehicle in one assembly step.

In accordance with a further embodiment of the invention, the flexible belt is a cable or a ribbon or a laminar plate. The material of the belt may comprise any material which is able to withstand punctual high-impact forces due to post collisions. Consequently, the material may comprise steel wires or steel ribbons or even a laminar plate which has a large area preferably covering the whole space between the longitudinal beams. For example, the laminar plate may interconnect all longitudinal beams. However in this case preferably the laminar plate further comprises a multitude of air venting holes distributed over the surface of the plate which permits a head wind originating from a moving vehicle to enter the area behind the front unit. For example, this area may accommodate the vehicle's engine or other technical equipment which requires air venting.

In a further embodiment, the flexible belt may be made of a plastics material like Kevlar. Further, a composite material comprising plastics and metal may be used.

In accordance with a further embodiment of the invention, the plates and the angular flexible belt are designed integrally. Alternatively, the bearers and the angular flexible belt are designed integrally. For example, a material engagement of the material of the belt and the plates or the bearers is given which may be due to melting of the materials of the belt and the plates or the bearers together, respectively. Alternatively, the material engagement may be the result of chemical processes which occurred on the interface between the angular flexible belt and the plates.

It is further possible that the angular flexible belt is fused with the plates or the bearers, such that the flexible belt is surrounded by the material of the plates or the bearers due to a plastic molding process, respectively.

In a further embodiment, the angular flexible belt may be fixed to the plates or the bearers by respective fastening means like screws or bolts.

In another aspect, the invention relates to a method for assembly of a front unit to a vehicle comprising at least two pairs of longitudinal beams, wherein the front unit comprises an upper and a lower bumper support and two bearers interconnecting the upper and lower bumper support. Each bearer is attached to a plate, wherein each plate is attachable to the distal ends of the two longitudinal beams. The bearers are adapted as shock absorbers in case of a vehicle crash, wherein the front unit further comprises an angular flexible belt interconnecting the bearers. The method comprises attaching and fixing the front unit to the longitudinal beams and attaching a bumper skin to the front unit, wherein the bumper skin covers the front unit completely.

It has to be noted here that the distal end of the longitudinal beams is understood as the end of the respective longitudinal beam oriented to the front side of the vehicle.

In the following, preferred embodiments of the invention are discussed in greater detail by way of example only using the following Figs:
- Fig. 1: is a schematic of a front unit with its cross-section viewed from the top,
- Fig. 2: shows the cross-section of the front unit of Fig. 1 in a side view,
- Fig. 3: shows a front unit in a cross-sectional side view with the angular flexible belt comprising air venting holes,
- Fig. 4: shows a front unit with fins,
- Fig. 5: is a schematic of a vehicle comprising a front unit,
- Fig. 6: is a schematic of a front unit in three-dimensional view.

In the following, similar elements are denoted by the same reference numerals. It has to be noted, that the following description relates to an embodiment in which the belt is attached to plates. However, this is not to be understood as limiting the invention to only a direct interconnection of the belt with plates. It is also possible to instead use an interconnection of the belt with bearers of the front unit.

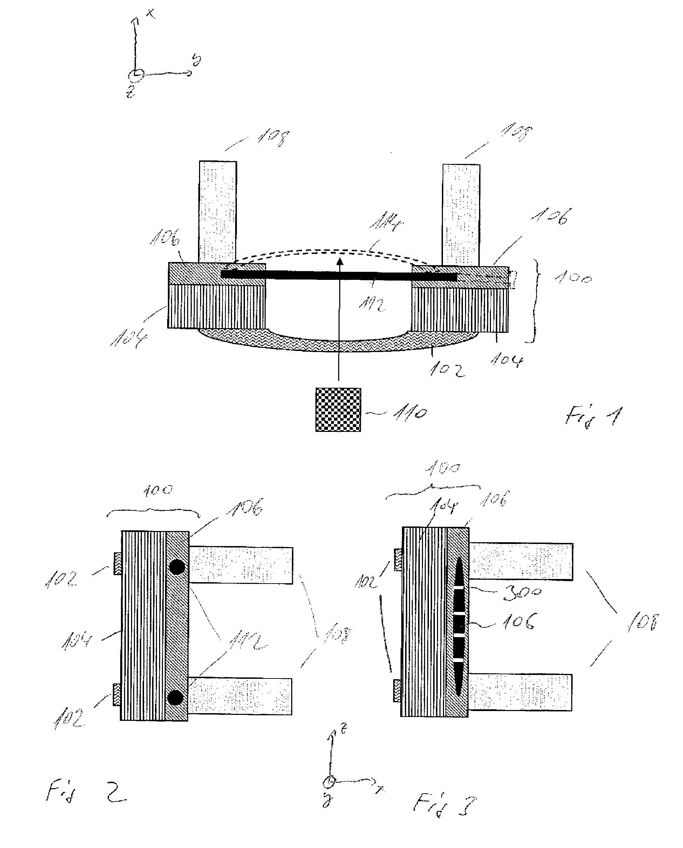

Fig. 1 illustrates a schematic of a front unit's cross-sectional view. Herein, the front unit is shown in the x-y plane of the vehicle with the x-direction corresponding to the longitudinal direction of the vehicle and the y-direction being the transversal direction of the car.

A vehicle typically comprises at least one pair of longitudinal beams 108 extending in x-direction. The front unit 100 which comprises plates 106, bearers 104, a bumper support 102 and an angular flexible belt 112 is fixed to the longitudinal beams 108.

As can be seen in Fig. 1, the front unit 100 is attached to the longitudinal beams 108 via the plates 106. The bearers 104 which act as shock absorbers in case of a vehicle crash are directly attached to the plates 106. The bearers are interconnected with each other via a bumper support 102 bridging the space between the bearers 104.

In case of a collision of a pedestrian with the front unit, both the bumper support 102 and the bearers 104 may be deformed in the x-direction thus absorbing impact energy.

In case a vehicle collides with a post like for example a tree or a lantern post 110, it will be the bumper support 102 and the bearers 104 which will at first sight prevent a penetration of the post 110 into the area between the longitudinal beams 108. In case of a penetration of the post 110 towards said area between the beams 108, an angular flexible belt 112 which interconnects the plates 106 will prevent a further penetration of the post 110 into the area between the beams 108. For example, the belt may be embedded into the plates 106 as shown in Fig. 1. Additionally, it is possible that the belt projects beyond the side surface of the plates 106, wherein the part of the belt 112 protruding the plate 106 and the side surface of the plate 106 forms a mechanical stop. This is illustrated in Fig. 1 by dashed lines.

However, in case of a strong impact of the post 110 with the front unit 100, the post 110 there may be the risk that the post may get in contact with the belt 112. Due to the angular flexible properties of the belt, the belt will then be deformed towards position 114 thus significantly absorbing the present impact energy. Due to the highly stable attachment of the belt 112 to the plates 106 and the high stability of the connection of the plates 106 to the longitudinal beams 108 a further penetration of the beam 110 towards the area between the longitudinal beams 108 will be stopped at position 114.

Therefore it can be summarized that a collision with a post 110 will lead to a multistep energy absorption process: due to the contact of the post 110 with the support 102 the impact force on the support 102 will be distributed towards the bearers 104. The bearers 104 will then be compressed thus absorbing energy. In case of high-impact energies, the support 102 may break thus further absorbing impact energy. Only in the very last step the post 110 will get in direct contact with the belt 112 which may then be deformed towards position 114 thus further absorbing impact energy and stopping the movement of the post 110 towards the area between the longitudinal beams 108, i.e. the area close to the passenger compartment.

Fig. 2 is a cross-section of a side view of the front unit 100 discussed above with respect to Fig. 1. As can be seen in Fig. 2, there are two pairs of longitudinal beams 108 which are arranged parallel to each other. The bearers 104 and the plates 106 interconnect the longitudinal beams. Further, the plates 106 cover the associated bearer 104 over the bearer's complete height and width.

As can be additionally seen in Fig. 2, there are provided two angular flexible belts 112 each on a level with the respective longitudinal beams 108. In the embodiment shown in Fig. 2, the belts 112 are cables.

In the alternative embodiment shown in Fig. 3, the belt is a laminar plate interconnecting the longitudinal beams 108. However, in this case the laminar plate 106 further comprises a multitude of air venting holes 300 distributed over the surface of the plate in order to permit a penetration of air towards the area between the longitudinal beams 108.

As can be further seen in Figs. 2 and 3, the supports 102 extend over the bearers 104 in longitudinal direction, i.e. x-direction such that in case of an impact the primary area of contact with the colliding object will be the bumper supports 102.

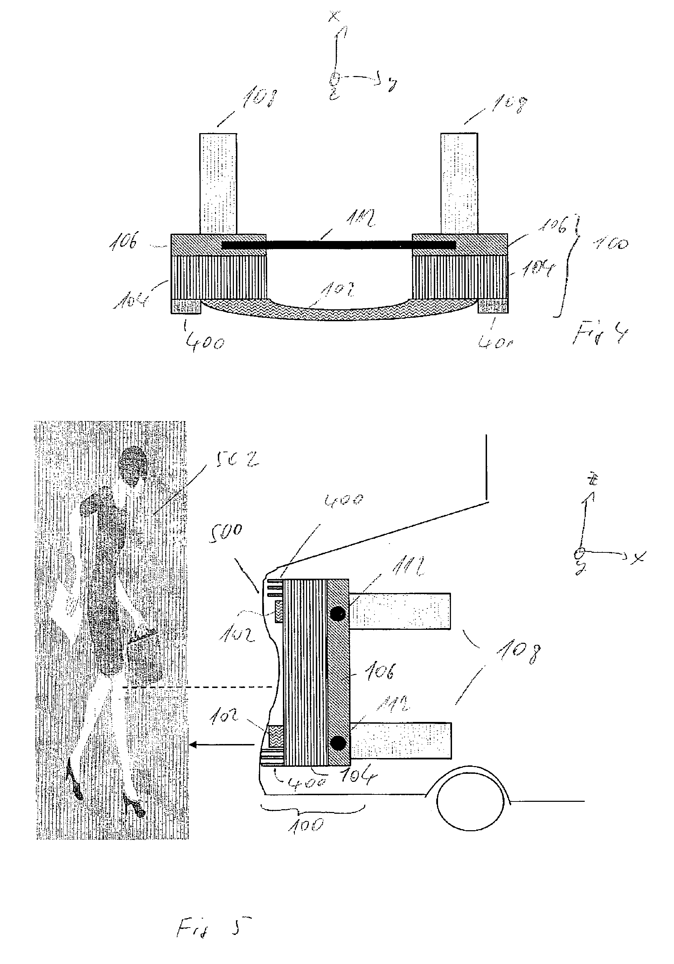

Fig. 4 illustrates a further embodiment of the above discussed front unit 100 (compare Fig. 1). In contrast to the embodiment shown in Fig. 1, the front unit in Fig. 4 additionally comprises freestanding fins 400 which are located on the bearers 104. The freestanding fins 400 extend away from the respective bearers 104 in x-direction.

The purpose of these fins becomes clear from Fig. 5 which is a cross-sectional view of the embodiment shown in Fig. 4: when the front unit 100 is mounted on the longitudinal beams 108 of a vehicle, typically an additional cover 500 will be provided which covers the front part of the vehicle and thus the front unit. As can be seen from Fig. 5, there are no bumpers necessary which are extra formed on the cover 500 - the bumpers are formed by the cover 500 itself. The bumper supports 102 are hidden behind the cover 500, wherein in case of a collision with an object the cover 500 is pressed against the bumper supports 102. Thus, the cover 500 acts itself as the bumper in case of a collision. However, it has to be noted here that it is also possible to provide extra bumpers which may be directly attached to the supports 102.

In the embodiment shown in Fig. 5, the freestanding fins 400 extend away from the respective bumper supports 102 and extend over the bumper support 102 in -x-direction, i.e. in the longitudinal direction of the vehicle. The purpose is the following: in case of a collision of the vehicle with a pedestrian 502, the lower section of the cover 500 will be the first part of the vehicle which gets in contact with the pedestrian. More precisely, this lower section of the cover 500 will preferably hit the pedestrian's legs below the pedestrian's knees thus drastically reducing the risk of serious injury of the pedestrian 502.

Additionally the fins are 400 contributing to the reduction of the risk of injury. The fins 400 will be the first element of the front unit 100 which will absorb impact energy in case of a pedestrian collision. The fins 400 overlap the other parts of the front unit 100, especially the bumper support 102. Since the fins 400 are highly elastic, the fins 400 define a first deformable energy absorption zone in front of the support 102 and the bearers 104. Optionally, the fins 400 are adapted to break above a predefined impact energy which further permits to improve pedestrian protection by the fins.

Only in case of high-impact energies occurring for example during a collision with another vehicle, the fins 400 will may get deformed in such a strong manner that the cover 500 additionally starts to deform the bumper supports 102 and optionally the bearers 104.

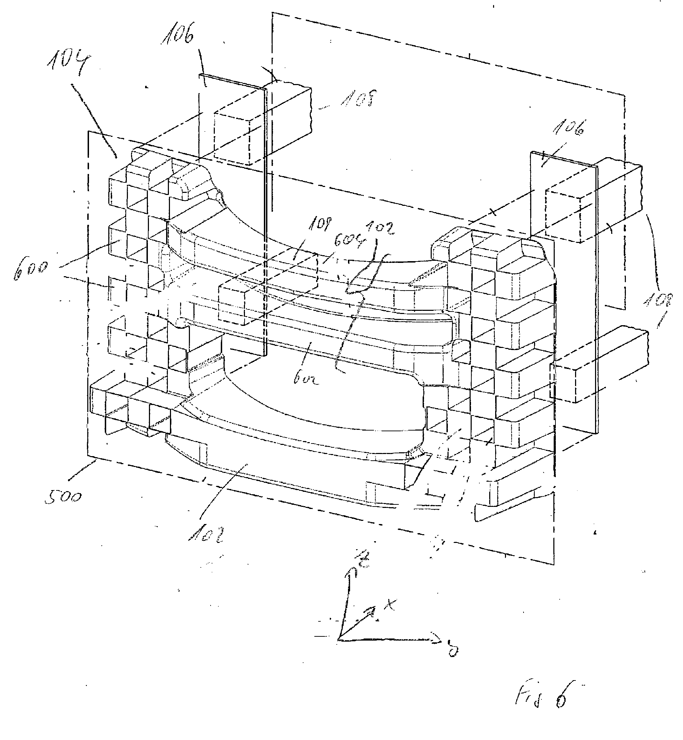

Fig. 6 is a three-dimensional sketch of a front unit 100 comprising an upper and lower bumper support 102, bearers 104 interconnecting the bumper supports 102 and plates 106 attached to the bearers 104. The front unit is mounted on two pairs of longitudinal beams 108 which extend in x-direction and are arranged parallel to each other.

As can be seen in Fig. 6, the bearers 104 comprise a honeycomb structure extending over the bearers 104. Thereby, the honeycomb structure comprises longitudinal hollow segments 600 which are stacked perpendicularly, i.e. in c- and y-direction on top of each other and which extend longitudinally as cuboids in x-direction.

In the embodiment shown in Fig. 6, the upper bumper support 102 consists of two horizontally arranged parts 602 and 604 which are separated from each other in vertical direction and which are arranged parallel to each other. These parts 602 and 604 increase the inertia of the upper bumper support 102 in case of a flexion and torsion. The same principle can be applied to any of the bumper supports 102 of the front unit.

## Claims

1. Front unit (100) for a vehicle, the vehicle comprising at least two pairs of longitudinal beams (108), wherein the front unit (100) comprises an upper and a lower bumper support (102) and two bearers interconnecting the upper and lower bumper support (102), wherein each bearer is attached to a plate (106), each plate (106) being attachable to the distal ends of two of the longitudinal beams (108), wherein the bearers are adapted as shock absorbers in case of a vehicle crash, **characterised in that** the front unit (100) further comprises an angular flexible belt (112) interconnecting the bearers.

2. The front unit (100) of claim 1, wherein the belt (112) interconnects the bearers indirectly via the plates (106).

3. The front unit (100) of claim 1, wherein the belt (112) interconnects the bearers directly, wherein the belt (112) is arranged along the upper or lower bumper support (102) adapting against said bumper support (102).

4. The front unit (100) of claim 1, wherein the bearers comprise a honeycomb structure extending over the bearers.

5. The front unit (100) of claim 4, wherein the honeycomb structure comprises longitudinal hollow segments (600), wherein the segments (600) are stacked perpendicularly on top of each other.

6. The front unit (100) of claim 1, wherein each plate (106) covers the associated bearer over the bearer's complete height and width.

7. The front unit (100) of claim 1, wherein the lower bumper support (102) is arranged on the front unit (100) at a predefined position, the position being defined by the condition that in case of a collision of the lower bumper with a pedestrian (502) the pedestrian's (502) leg is hit below the pedestrians knee when the lower bumper is mounted on the longitudinal beams (108).

8. The front unit (100) of claim 1, wherein
- the upper and/or lower bumper support (102) comprises freestanding fins extending away from the respective bumper support (102) and/or
- the bearers comprise freestanding fins extending away from the respective bearer.

9. The front unit (100) of claim 2, wherein the flexible belt (112) is directly attached to the plates (106) or to the longitudinal beams (108).

10. The front unit (100) of claim 1, wherein the flexible belt (112) is a cable or a ribbon or a laminar plate.

11. The front unit (100) of claim 10, wherein the laminar plate (106) is interconnecting all longitudinal beams (108), wherein the laminar plate (106) further comprises a multitude of air venting holes distributed over the surface of the plate (106).

12. The front unit (100) of claim 1, wherein the plates (106) and the angular flexible belt (112) are designed integrally or wherein the bearers and the angular flexible belt (112) are designed integrally.

13. The front unit (100) of claim 12, wherein the angular flexible belt (112) is fused with the plates (106) or wherein the angular flexible belt (112) is fused with the bearers.

14. The front unit (100) of claim 1, wherein the angular flexible belt (112) is fixed to the plates (106) or the bearers by fastening means.

15. A method for assembly of a front unit (100) to a vehicle comprising at least two pairs of longitudinal beams (108), wherein the front unit (100) comprises an upper an a lower bumper support (102) and two bearers interconnecting the upper and lower bumper support (102), wherein each bearer is attached to a plate (106), each plate (106) being attachable to the distal ends of two of the longitudinal beams (108), wherein the bearers are adapted as shock absorbers in case of a vehicle crash, wherein the front unit (100) further comprises an angular flexible belt (112) interconnecting the bearers, the method comprising
- attaching and fixing the front unit (100) to the longitudinal beams (108),
- attaching a bumper skin (500) to the front unit (100), the bumper skin (500) covering the front unit (100) completely.

## Patentansprüche

1. Fronteinheit (100) für ein Fahrzeug, wobei das Fahrzeug mindestens zwei Paar längsgerichtete Stangen (108) umfasst, wobei die Fronteinheit (100) eine obere und eine untere Stoßstangenhalterung (102) umfasst, sowie zwei Träger, die die obere und die untere Stoßstangenhalterung (102) miteinander verbinden, wobei jeder Träger an einer Platte (106) befestigt ist, wobei jede Platte (106) an die distalen Enden von zwei der Längsstangen (108) befestigt werden kann, wobei die Träger als Stoßdämpfer für den Fall eines Fahrzeugzusammenstoßes ausgelegt sind, **dadurch gekennzeichnet, dass** die Fronteinheit (100) weiter einen angewinkelten flexiblen Gurt (112) aufweist, der die Träger miteinander verbindet.

2. Fronteinheit (100) nach Anspruch 1, wobei der Gurt (112) die Träger indirekt über die Platten (106) miteinander verbindet.

3. Fronteinheit (100) nach Anspruch 1, wobei der Gurt (112) die Träger direkt miteinander verbindet, wobei der Gurt (112) entlang der oberen oder der unteren Stoßstangenhalterung (102) angeordnet ist und sich an die Stoßstangenhalterung (102) anpasst.

4. Fronteinheit (100) nach Anspruch 1, wobei die Träger eine Wabenstruktur aufweisen, die sich über die Träger erstreckt.

5. Fronteinheit (100) nach Anspruch 4, wobei die Wabenstruktur längsgerichtete hohle Abschnitte (600) umfasst, wobei die Abschnitte (600) senkrecht übereinander gestapelt sind.

6. Fronteinheit (100) nach Anspruch 1, wobei jede Platte (106) den assoziierten Träger über die gesamte Höhe und Breite des Trägers abdeckt.

7. Fronteinheit (100) nach Anspruch 1, wobei die untere Stoßstangenhalterung (102) an einer vordefinierten Position auf der Fronteinheit (100) angeordnet ist, wobei die Position durch die Bedingung definiert ist, dass im Fall eines Zusammenstoßes der unteren Stoßstange mit einem Fußgänger (502) das Bein des Fußgängers (502) unter dem Knie des Fußgängers getroffen wird, wenn der untere Stoßdämpfer auf den längsgerichteten Stangen (108) montiert ist.

8. Fronteinheit (100) nach Anspruch 1, wobei
- die untere und/oder die obere Stoßstangenhalterung (102) freistehende Rippen umfasst, die sich von der entsprechenden Stoßstangenhalterung (102) weg erstrecken und/oder
- die Träger freistehende Rippen umfassen, die sich vom entsprechenden Träger weg erstrecken.

9. Fronteinheit (100) nach Anspruch 2, wobei der flexible Gurt (112) direkt an die Platten (106) oder die längsgerichteten Stangen (108) befestigt ist.

10. Fronteinheit (100) nach Anspruch 1, wobei der flexible Gurt (112) ein Kabel oder ein Band oder eine laminare Platte ist.

11. Fronteinheit (100) nach Anspruch 10, wobei die laminare Platte (106) alle längsgerichteten Stangen (108) miteinander verbindet, wobei die laminare Platte (106) weiter eine Vielzahl von Entlüftungslöchern umfasst, die über die Oberfläche der Platte (106) verteilt sind.

12. Fronteinheit (100) nach Anspruch 1, wobei die Platten (106) und der angewinkelte flexible Gurt (112) einstückig entworfen sind, oder wobei die Träger und der angwinkelte flexible Gurt (112) einstückig entworfen sind.

13. Fronteinheit (100) nach Anspruch 12, wobei der angewinklte flexible Gurt (112) mit den Platten (106) verschmolzen ist oder wobei der angewinkelte flexible Gurt (112) mit den Trägern verschmolzen ist.

14. Fronteinheit (100) nach Anspruch 1, wobei der angweinkelte flexible Gurt (112) durch Befestigungsmittel an die Platten (106) oder die Träger befestigt ist.

15. Verfahren zur Montage einer Fronteinheit (100) an ein Fahrzeug, umfassend mindestens zwei Paar längsgerichtete Stangen (108), wobei die Fronteinheit (100) eine obere und eine untere Stoßstangenhalterung (102) umfasst, sowie zwei Träger, die die obere und die untere Stoßstangenhalterung (102) miteinander verbinden, wobei jeder Träger an einer Platte (106) befestigt ist, wobei jede Platte (106) an die distalen Enden von zwei der längsgerichteten Stangen (108) befestigt werden kann, wobei die Träger als Stoßdämpfer für den Fall eines Fahrzeugzusammenstoßes ausgelegt sind, wobei die Fronteinheit (100) weiter einen angewinkelten flexiblen Gurt (112) aufweist, der die Träger miteinander verbindet, wobei das Verfahren Folgendes umfasst:
- Befestigung und Fixierung der Fronteinheit (100) an die längsgerichteten Stangen (108),
- Befestigung einer Stoßstangenhaut (500) an die Fronteinheit (100), wobei die Stoßstangenhaut (500) die Fronteinheit (100) vollständig bedeckt.

## Revendications

1. Unité frontale (100) pour un véhicule, le véhicule comprenant au moins deux paires de poutres longitudinales (108), dans laquelle l'unité frontale (100) comprend un support de pare-chocs supérieur et inférieur (102) et deux traverses raccordant les supports de pare-chocs supérieur et inférieur (102), dans laquelle chaque traverse est fixée à une plaque (106), chaque plaque (106) pouvant être fixée aux extrémités distales des deux poutres longitudinales (108), dans laquelle les traverses sont adaptées en tant qu'amortisseurs dans le cas d'une collision de véhicule, **caractérisée en ce que** l'unité frontale (100) comprend en outre une courroie flexible angulaire (112) interconnectant les traverses.

2. Unité frontale (100) selon la revendication 1, dans laquelle la courroie (112) interconnecte les traverses indirectement via les plaques (106).

3. Unité frontale (100) selon la revendication 1, dans laquelle la courroie (112) interconnecte directement les traverses, dans laquelle la courroie (112) est agencée le long du support de pare-chocs supérieur ou inférieur (102) s'adaptant contre ledit support de pare-chocs (102).

4. Unité frontale (100) selon la revendication 1, dans laquelle les traverses comprennent une structure en nid d'abeilles s'étendant sur les traverses.

5. Unité frontale (100) selon la revendication 4, dans laquelle la structure en nid d'abeilles comprend des segments creux longitudinaux (600), dans laquelle les segments (600) sont empilés perpendiculairement les uns au-dessus des autres.

6. Unité frontale (100) selon la revendication 1, dans laquelle chaque plaque (106) recouvre la traverse associée sur toute la hauteur et la largeur de la traverse.

7. Unité frontale (100) selon la revendication 1, dans laquelle le support de pare-chocs inférieur (102) est agencé sur l'unité frontale (100) dans une position prédéterminée, la position étant définie par la condition dans laquelle, en cas d'une collision du pare-chocs inférieur avec un piéton (502), la jambe du piéton (502) est heurtée sous le genou lorsque le pare-chocs inférieur est monté sur les poutres longitudinales (108).

8. Unité frontale (100) selon la revendication 1, dans laquelle :
le support de pare-chocs supérieur et/ou inférieur (102) comprend des ailettes non encastrées s'étendant à distance du support de pare-chocs (102) respectifs, et/ou
les traverses comprennent des ailettes non encastrées s'étendant à distance de la traverse respective.

9. Unité frontale (100) selon la revendication 2, dans laquelle la courroie flexible (112) est directement fixée aux plaques (106) ou aux poutres longitudinales (108).

10. Unité frontale (100) selon la revendication 1, dans laquelle la courroie flexible (112) est un câble ou un ruban ou une plaque laminaire.

11. Unité frontale (100) selon la revendication 10, dans laquelle la plaque laminaire (106) interconnecte toutes les poutres longitudinales (108), dans laquelle la plaque laminaire (106) comprend en outre une multitude de trous d'évacuation d'air répartis sur la surface de la plaque (106).

12. Unité frontale (100) selon la revendication 1, dans laquelle les plaques (106) et la courroie flexible angulaire (112) sont conçues de manière solidaire ou dans laquelle les traverses et la courroie flexible angulaire (112) sont conçues de manière solidaire.

13. Unité frontale (100) selon la revendication 12, dans laquelle la courroie flexible angulaire (112) fusionne avec les plaques (106) ou dans laquelle la courroie flexible angulaire (112) fusionne avec les traverses.

14. Unité frontale (100) selon la revendication 1, dans laquelle la courroie flexible angulaire (112) est fixée sur les plaques (106) ou les traverses par des moyens de fixation.

15. Procédé pour assembler une unité frontale (100) à un véhicule, comprenant au moins deux paires de poutres longitudinales (108), dans lequel l'unité frontale (100) comprend un support de pare-chocs supérieur et un support de pare-chocs inférieur (102) et deux traverses interconnectant les supports de pare-chocs supérieur et inférieur (102), dans lequel chaque traverse est fixée à une plaque (106), chaque plaque (106) pouvant être fixée aux extrémités distales de deux des poutres longitudinales (108), dans lequel les traverses sont adaptées comme des amortisseurs en cas de collision de véhicule, dans lequel l'unité frontale (100) comprend en outre une courroie flexible angulaire (112) interconnectant les traverses, le procédé comprend les étapes consistant à :
attacher et fixer l'unité frontale (100) aux poutres longitudinales (108),
attacher un revêtement de pare-chocs (500) à l'unité frontale (100), le revêtement de pare-chocs (500) recouvrant complètement l'unité frontale (100).
